# EUROPÄISCHE PATENTSCHRIFT

(11) **EP 1 265 760 B1**
(45) Veröffentlichungstag und Bekanntmachung des Hinweises auf die Patenterteilung: **28.04.2004**
(21) Anmeldenummer: 01903695.3
(22) Anmeldetag: 03.02.2001
(51) Int. Cl.: B60C 23/04

(54) **EINRICHTUNG AN FAHRZEUGEN MIT RÄDERN, DIE LUFTREIFEN HABEN, ZUR VERWENDUNG IN EINEM REIFENDRUCKÜBERWACHUNGSSYSTEM**
DEVICE MOUNTED ON VEHICLES WITH PNEUMATIC-TIRED WHEELS, FOR USE IN A TIRE PRESSURE MONITORING SYSTEM
DISPOSITIF CON U POUR DES VEHICULES A ROUES POURVUES DE PNEUMATIQUES ET DESTINE A UN SYSTEME DE SURVEILLANCE DE LA PRESSION DES PNEUS

(30) Priorität: 22.03.2000 DE 10014949
(43) Veröffentlichungstag der Anmeldung: 18.12.2002
(73) Patentinhaber: Beru AG, 71636 Ludwigsburg (DE)
(72) Erfinder: NORMANN, Norbert, 75223 Niefern-Öschelbronn (DE); SCHULZE, Gunter, Lothar, 75228 Ispringen (DE)
(74) Vertreter: Twelmeier, Ulrich, Dipl. Phys.
(86) Internationale Anmeldenummer: PCT/EP2001/001175
(87) Internationale Veröffentlichungsnummer: WO 2001/070520

(56) Entgegenhaltungen:
- US-A- 5 663 496

## Beschreibung

Die Erfindung geht aus von einer Einrichtung mit den im Oberbegriff des Anspruchs 1 angegebenen Merkmalen. Eine solche Einrichtung ist aus der DE 195 18 806 A1 bekannt, welche offenbart, den Luftdruck in den Reifen eines Fahrzeugs mittels Drucksensoren zu überwachen, welche zusammen mit einer batteriebetriebenen elektronischen Meß- und Steuerschaltung, mit einem Sender und mit einer Sendeantenne am jeweiligen Rad vorgesehen sind, insbesondere am Ventil oder in Baueinheit mit dem Ventil des Rades. Ein solches am Rad vorgesehenes Gerät wird nachfolgend auch als Radelektronik bezeichnet. Die von dem Drucksensor in der jeweiligen Radelektronik gelieferten elektrischen Reifendrucksignale werden durch die elektronische Meß- und Steuerschaltung der Radelektronik um ein das jeweilige Rad kennzeichnendes Identifikationssignal ergänzt, in digitale Funksignale umgewandelt und über Funk an ein zentrales Empfangs-, Auswerte- und Steuergerät übermittelt, welches zu diesem Zweck mit Empfangsantennen verbunden ist, von denen je eine in der Nachbarschaft eines der Räder angeordnet ist, insbesondere an der Wand des Radkastens der Fahrzeugkarosserie. Die Funksignale bilden ein Datentelegramm, welches als Bestandteile in digitaler Form eine Präambel, das Identifikationssignal, ein den Reifendruck oder eine davon abgeleitete Größe enthaltendes Signal und eine Postambel enthält. Die Funksignale sind Hochfrequenzsignale. Die Hochfrequenzübertragung erfolgt in Deutschland im 433 MHz-Bereich, dem sogenannten ISM-Band; in einigen anderen Ländern erfolgt die Übertragung im 315 MHz-Bereich oder im 868 MHz-Bereich. Die von den Radelektroniken gesendeten Funksignale werden von den vorgesehenen Empfangsantennen empfangen.

Gemäß der DE 195 18 806 A1 übertragen die Empfangsantennen die HF-Signale über spezielle HF-taugliche Leitungen an das zentrale Empfangs-, Auswerte- und Steuergerät, in welchem ein HF-Empfänger, der für jede Empfangsantenne einen eigenen Empfangskanal hat, das auf dem Eingang des jeweiligen Empfangskanals ankommende Signal verstärkt und demoduliert. Das nach der Demodulation vorliegende niederfrequente Signal wird dekodiert und ausgewertet, um dem Fahrer über den Steuerteil des Empfangs-, Auswerte- und Steuergerätes ggfs. eine Warnung oder eine sonstige Information über den Reifendruck zukommen zu lassen.

Da die Radelektroniken meistens batteriebetrieben sind und die Lebensdauer der Batterie möglichst lang sein, z.B. wenigstens sieben Jahre betragen soll, müssen die Radelektroniken so stromsparend wie nur möglich arbeiten. Ihre Funksignale sind deshalb sehr schwach. Aufgrund des niedrigen Signalpegels bedürfen bei dem aus der DE 195 18 806 A1 bekannten System die elektrischen Leitungen zwischen den Empfangsantennen und dem zentralen Empfangs-, Auswerte- und Steuergerät aufwendiger Maßnahmen zum Schutz der auf diesen Leitungen übertragenen Signale gegen äußere Störeinflüsse. Bei einem praktisch ausgeführten Reifendruck-Kontrollsystem gemäß der DE 195 18 806 A1 sind die elektrischen Leitungen aufwendig geschirmte twisted-pair-Kabel. Die damit erreichbare Sicherheit gegen Störungen ist unvollkommen und bringt erhebliche Kosten mit sich.

Der vorliegenden Erfindung liegt die Aufgabe zugrunde, einen Weg anzugeben, wie die Übertragung der Signale in höherem Maße störunempfindlich und dennoch preiswert gestaltet werden kann. Dabei muß sichergestellt bleiben, daß das zentrale Auswerte- und Steuergerät aus den ihm übermittelten Signalen erkennen kann, von welcher Empfangsantenne das jeweilige Signal herkommt.

Diese Aufgabe wird gelöst durch eine Einrichtung mit den im Anspruch 1 angegebenen Merkmalen. Vorteilhafte Weiterbildungen der Erfindung sind Gegenstand der abhängigen Ansprüche.

Erfindungsgemäß sind der HF-Empfänger und ein Auswerte- und Steuergerät nicht mehr wie im Stand der Technik zu einer Baueinheit zusammengefaßt, welche als ein zentrales Gerät im Fahrzeug angeordnet und mit allen Empfangsantennen verbunden ist. Statt dessen ist jetzt jeder Empfangsantenne ein eigener HF-Empfänger zugeordnet, welcher mittels eines BUS mit dem Auswerte- und Steuergerät verbunden ist, welches nunmehr keinen HF-Empfangsteil mehr benötigt.

Die Erfindung ist vorteilhaft, weil das BUS-System, welches elektrische Signale in digitalisierter Form überträgt, zur Übertragung dieser Signale keine aufwendig geschirmte Kabel benötigt; es können vielmehr ungeschirmte elektrische Leitungen verwendet werden, welche sehr viel preiswerter als geschirmte Kabel sind. Hat das Fahrzeug, was heute häufig der Fall ist, bereits ein BUS-System, dann kann dieses für die Zwecke der Erfindung mitbenutzt werden und es muß nur noch dafür gesorgt werden, daß die HF-Empfänger einerseits und das Auswerteund Steuergerät andererseits mit dem vorhandenen BUS-System verbunden sind, wozu nur wenige, je nach der räumlichen Anordnung des BUS-Systems nur kurze oder mäßig lange zusätzliche Leitungen benötigt werden, welche sich in einen für das Fahrzeug vorgesehenen Kabelbaum leicht integrieren und mit diesem vorfertigen und installieren lassen. Als weiterer Vorteil kommt hinzu, daß durch die Zuordnung eines HF-Empfängers zu einer jeden der Empfangsantennen die Störempfindlichkeit der Signalübertragung minimiert werden kann, denn die jeweilige Empfangsantenne und der ihr zugeordnete HF-Empfänger können dicht benachbart angeordnet oder sogar zu einer Baueinheit zusammengefaßt werden, so daß anders als in dem durch die DE 195 18 806 A1 offenbarten System Hochfrequenzsignale nicht mehr über längere Leitungswege übertragen werden müssen, sondern von der Empfangsantenne auf kürzestem Weg unmittelbar in den HF-Empfänger eingespeist, in einem diesem nachgeschalteten Demodulator in NF-Signale gewandelt und diese in einer BUS-Schnittstelle dekodiert, digitalisiert und in eine für das gewählte BUS-System geeignete Signalform gebracht werden.

Die Übertragung von niederfrequenten Signalen und insbesondere die von digitalen Gleichstromsignalen unterliegt einer wesentlich geringeren Störempfindlichkeit als die Übertragung von HF-Signalen über twisted-pair-Kabel gemäß dem in der DE 195 18 806 A1 offenbarten System. Zu der Störunempfindlichkeit der Signalübertragung vom HF-Empfänger zum Auswerte- und Steuergerät trägt die kürzest mögliche Leitungsverbindung zum HF-Empfänger insbesondere dann bei, wenn die Empfangsantenne und der ihr zugeordnete HF-Empfänger zu einer Baueinheit zusammengefaßt sind.

Als BUS-System eignet sich jedes bekannte BUS-System, z.B. der CAN-BUS.

Der HF-Empfänger kann preiswert sein; es wird lediglich ein einkanaliger HF-Empfänger benötigt. Die HF-Empfänger benötigen eine Spannungsversorgung aus dem elektrischen Bordnetz des Fahrzeugs. Die Spannungsversorgung kann über eine gesonderte Zuleitung vom Bordnetz zum jeweiligen HF-Empfänger erfolgen. Vorzugsweise erfolgt die Spannungsversorgung jedoch nicht über gesonderte Leitungen, sondern über das BUS-System selbst.

Anders als bei dem aus der DE 195 18 806 A1 bekannten Reifendrucküberwachungssystem kann bei der erfindungsgemäßen Verwendung eines BUS-Systems das Auswerte- und Steuergerät allein aus der Leitungsführung zwischen den Empfangsantennen und dem Auswerte- und Steuergerät nicht erkennen, von welcher Empfangsantenne ein dem Auswerte- und Steuergerät übermitteltes Signal stammt. Damit das Auswerte- und Steuergerät diese Informationen gewinnen kann, ist erfindungsgemäß weiterhin vorgesehen, daß sich an der BUS-Schnittstelle, welche der jeweiligen Empfangsantenne zugeordnet ist, ein Steckverbinder befindet, mit welchem diese Schnittstelle an den BUS angeschlossen wird. Der Steckverbinder hat zwei Verbindungsteile, ein erstes Verbindungsteil, welches an den BUS angeschlossen ist und ein zweites Verbindungsteil, welches an die BUS-Schnittstelle angeschlossen ist. Das erste Verbindungsteil ist erfindungsgemäß derart ausgebildet, daß es in elektrisch - mechanischer Form eine Kennung bereitstellt, die durch Verbinden mit dem zweiten Verbindungsteil der beim HF-Empfänger vorgesehenen Schaltungsanordnung zur Erzeugung eines digitalen, elektrischen Kennungssignals übermittelt wird, welches durch die baulich bedingte Kennung des ersten Verbindungsteils bestimmt ist. Die Kennung, welche das erste Verbindungsteil des Steckverbinders trägt, ist für jeden Einbauort einer Empfangsantenne unterschiedlich gewählt. Durch seine Verbindung mit dem zweiten Verbindungsteil wird die Kennung der zur Erzeugung eines digitalen, elektrischen Kennungssignals vorgesehenen Schaltungsanordnung übermittelt; diese Schaltungsanordnung erzeugt daraufhin ein digitales, elektrisches Kennungssignal, welches durch die Kennung des ersten Verbindungsteils bestimmt ist, und fügt dieses Kennungssignal dem Datentelegramm hinzu, welches der zugehörige Empfänger per Funk von einer Radelektronik empfangen hat. Jedes im zentralen Auswerte- und Steuergerät ankommende Datentelegramm enthält deshalb ein Kennungssignal, welches Auskunft darüber gibt, von welcher Empfangsantenne das im Datentelegramm enthaltene Druckmeßsignal empfangen wurde. Durch Vergleichen des im Datentelegramm enthaltenen digitalen elektrischen Kennungssignales mit den im Auswerte- und Steuergerät gespeicherten Kennungen aller möglichen Einbauorte von Empfangsantennen kann das Auswerte- und Steuergerät eindeutig bestimmen, von welcher Empfangsantenne ein jedes Datentelegramm empfangen wurde wenn das digitale Kennungssignal fehlerfrei mitübertragen wurde. Andernfalls kann das Datentelegramm als fehlerhaft verworfen werden.

Die erfindungsgemäße Weise, zu ermitteln, von welcher Empfangsantenne ein Datentelegramm empfangen wurde, hat wesentliche Vorteile:
◆ Die aus je einer Empfangsantenne, einem HF-Empfänger in Verbindung mit einem Demodulator, einer Schaltungsanordnung zum Erzeugen eines den Einbauort der Empfangsantenne kennzeichnenden Kennungssignals und einer BUS-Schnittstelle bestehenden Baugruppen oder Baueinheiten können ununterscheidbar identisch ausgebildet sein. Das erleichtert sowohl die Fertigung als auch die Lagerhaltung. Erst dadurch, daß diese Baugruppen oder Baueinheiten an unterschiedlichen Einbauorten eingebaut und durch Zusammenstekken der beiden Verbindungsteile der Steckverbinder an den BUS angeschlossen werden, werden sie für das Auswerte- und Steuergerät unterscheidbar.
◆ Die für den Einbauort charakteristische Kodierung erfolgt im Zuge der ohnehin erforderlichen Verkabelung des Fahrzeuges bei dessen Herstellung.
◆ Der BUS kann Bestandteil eines ohnehin herzustellenden und einzubauenden Kabelbaumes sein. Bei der Kabelbaummontage ist es schon bisher eine Standardanforderung, daß bestimmte Steckverbinderteile an bestimmten Einbauorten zu liegen haben. Dies nun auch für Steckverbinder im Zusammenhang mit einem Reifendrucküberwachungssystem zu verwirklichen, stellt den Fachmann für Kabelbäume vor keinerlei Schwierigkeiten, so daß die Montage der am Kabelbaum angebrachten "ersten" Verbindungsteile an den richtigen Einbauorten ohne weiteres gewährleistet ist.
◆ Im Auswerte- und Steuergerät können nicht nur die Kennungen der Einbauorte der tatsächlich eingebauten Empfangsantennen gespeichert sein, sondern auch weitere Einbauorte, welche nur in Modellvarianten des Fahrzeuges vorkommen, oder sogar Einbauorte an Anhängern, welche nur zeitweise mitgeführt werden. So könnte z.B. in einer teureren Modellvariante einem jeden Rad eine Baugruppe aus Empfangsantenne, HF-Empfänger mit Demodulator, mit einer Schaltungsanordnung zum Erzeugen eines Kennungssignals und mit einer BUS-Schnittstelle zugeordnet sein. In einer preiswerteren Modellvariante könnte man sich darauf beschränken, den auf einer gemeinsamen Achse angeordneten Rädern eine Baugruppe oder Baueinheit gemeinsam zuzuordnen. In einer noch preiswerteren Modellvariante könnte man allen Rädern eines Fahrzeuges eine gemeinsame, zentrale angeordnete Baugruppe oder Baueinehit zuordnen. In einer zusätzlichen Variante könnte man berücksichtigen, daß ein einachsiger Anhänger, z.B. ein Wohnanhänger, an dessen Rädern ebenfalls eine Reifendrucküberwachung stattfinden soll, angehängt werden kann. In einer weiteren Variante könnte man vorsehen, daß ein zweiachsiger Anhänger angehängt werden kann, in welchem die Räder mit Hilfe einer oder mehrerer solcher Baugruppen oder Baueinheiten auf den Reifendruck überwacht werden sollen. Eine große Anzahl von Varianten für unterschiedliche Einbauorte kann von vornherein im zentralen Auswerte- und Steuergerät angelegt sein, wobei jedem möglichen Einbauort eine eigene Kennung zugeordnet und gespeichert ist, welche von den Kennungen alle anderen möglichen Einbauorte verschieden ist.
◆ Für unterschiedliche Modellvarianten und Ausstattungsvarianten des Fahrzeugs können in an sich bekannter Weise unterschiedliche Kabelbäume mit unterschiedlich kodierten "ersten" Verbindungsteilen von Steckverbindern eingesetzt werden. Damit ist das erfindungsgemäße System mit identischen Baugruppen oder Baueinheiten aus Empfangsantenne, HF-Empfänger mit Demodulator, Schaltungsanordnung zum Erzeugen eines Kennungssignals und BUS-Schnittstelle und mit identischen Auswerte- und Steuergeräten für alle Modellvarianten und Ausstattungsvarianten der Fahrzeuge ohne weitere Anpassung einsetzbar, was für die Fahrzeugmontage und für Reparatur- und Wartungszwecke außerordentlich vorteilhaft ist.

So kann z.B. für den Fall, daß ein Anhänger Berücksichtigung finden soll, bereits bei der Montage einer Anhängerkupplung die für diese Ausstattungsvariante erforderliche Steckverbinderkodierung erfolgen, weil im Zusammenhang mit der Montage der Anhängerkupplung ohnehin ein elektrischer Kuppler für den Anschluß eines Anhängers montiert werden muß.

Erfindungsgemäß wird das "erste" Verbindungsteil des dem Einbauort der jeweiligen Empfangsantenne zugeordneten Steckverbinders so ausgebildet, daß es eine Kennung in elektrisch - mechanischer Form bereitstellt. Darunter wird verstanden, daß sich die ersten Verbindungsteile der Steckverbinder im mechanischen Aufbau unterscheiden und daß sich nach dem Zusammenstecken eines ersten Verbindungsteils mit einem zweiten Verbindungsteil diese Unterschiede elektrisch auf die beim HF-Empfänger vorgesehene Schaltungsanordnung zur Erzeugung eines digitalen elektrischen Kennungssignales auswirken, nämlich so, daß dieses ein von der Kennung des ersten Verbindungsteils bestimmtes digitales elektrisches Kennungssignal erzeugt und übermittelt. Welchen Aufbau diese digitalen Kennungssignale haben, wird durch den Aufbau der Schaltungsanordnung vorbestimmt. Die Schaltungsanordnung ist so ausgebildet, daß sie für alle möglichen Einbauorte einer Empfangsantenne ein vorgegebenes, für den jeweiligen Einbauort kennzeichnendes Kennungssignal erzeugen und übermitteln kann.

Für den Anschluß an einen BUS benötigt der Steckverbinder eine von der gewählten BUS-Struktur bestimmte Anzahl von Kontaktpaaren. Um darüber hinaus eine vom Einbauort der Empfangsantenne bestimmte elektrisch - mechanische Kennung bereitstellen zu können, sind vorzugsweise mehrere zusätzliche Kontaktpaare im Steckverbinder vorgesehen, wobei die Kontaktpaare zweckmäßigerweise jeweils aus einem Kontaktstift und einer zugehörigen Kontaktbuchse bestehen, wobei es gleichgültig ist, ob die Kontaktstifte am ersten Verbindungsteil und die Kontaktbuchsen am zweiten Verbindungsteil des Steckverbinders vorgesehen sind oder umgekehrt. Während die zusätzlichen Kontaktstifte oder Kontaktbuchsen am zweiten Verbindungsteil des Steckverbinders für alle möglichen Einbauorte in identischer Weise vorgesehen, angeordnet und mit der Schaltungsanordnung zur Erzeugung des digitalen elektrischen Kennungssignales verbunden sind, gibt es abhängig vom vorgesehenen Einbauort im ersten Verbindungsteil Unterschiede in der Anzahl und / oder in der Anordnung der zusätzlichen Kontaktstifte bzw. Kontaktbuchsen und / oder Unterschiede hinsichtlich ihrer Verbindung mit einer elektrische Spannung führenden Leitung des Bordnetzes des Fahrzeuges oder mit Masse, wobei dieses für jeden möglichen Einbauort unterschiedlich gewählt wird. So kann man z.B. aus den im ersten Verbindungsteil des Steckverbinders vorgesehenen zusätzlichen Kontaktstiften bzw. Kontaktbuchsen für jeden möglichen Einbauort zwei verschiedene Kontaktstifte bzw. Kontaktbuchsen auswählen und von diesen den einen mit Masse und den anderen mit einer Spannung führenden Leitung verbinden. Je nach dem, auf welchen beiden Kontaktbuchsen oder -stiften dieses erfolgt, wirs die Schaltungsanordnung dadurch, daß sie auf unterschiedlichen Eingängen Spannung erhält, gesteuert, und erzeugt ein durch die ausgewählte Belegung der zusätzlichen Kontaktstifte bzw. Kontaktbuchsen mit Masse und Spannung bestimmtes Kennungssignal und fügt es einem jeden Datentelegramm hinzu, welches an das Auswerte- und Steuergerät weitergeleitet wird. So läßt sich mit einer Anzahl n von zusätzlichen Kontaktpaaren zwischen 2" Einbauorten unterscheiden.

Obwohl sich die "ersten" Verbindungsteile in ihrer Kontaktbelegung unterscheiden, passen sie jedoch sämtlich auf die vorzugsweise übereinstimmenden "zweiten" Verbindungsteile der Steckverbinder und bilden somit eine Familie von Verbindungsteilen, welche in ihrem Grundaufbau übereinstimmen, sich aber in der Anzahl und / oder Anordnung der zusätzlichen Kontakte und / oder ihre Belegung mit Spannung und Masse unterscheiden können. Die Zuordnung der damit möglichen Varianten der "ersten" Verbindungsteile zu unterschiedlichen Einbauorten kann für alle Fahrzeuge einer Modellfamilie gleich bleiben und paßt für alle Ausstattungsvarianten einer Modellfamilie.

Anhand der beigefügten Zeichnungen werden vorteilhafte Ausführungsbeispiele der Erfindung beschrieben.
- Figur 1: zeigt schematisch in einer Blockdarstellung die Anordnung der wesentlichen Bestandteile eines Reifendrucküberwachungssystems in einem Fahrzeug unter Nutzung eines in dem Fahrzeug installierten BUS-Systems,
- Figur 2: zeigt schematisch in einer Blockdarstellung ein Beispiel einer Kodierung des Einbauortes einer Empfangsantenne mit Hilfe eines entsprechend kodierten Steckverbinders, und
- Figur 3: zeigt in einer Blockdarstellung ähnlich der Figur 1 an einem Beispiel eines Fahrzeugs mit einem Anhänger, wie erfindungsgemäß von vornherein unterschiedliche Ausstattungsvarianten Berücksichtigung finden können.

Gleiche oder einander entsprechende Teile sind in den verschiedenen Figuren mit übereinstimmenden Bezugszahlen bezeichnet.

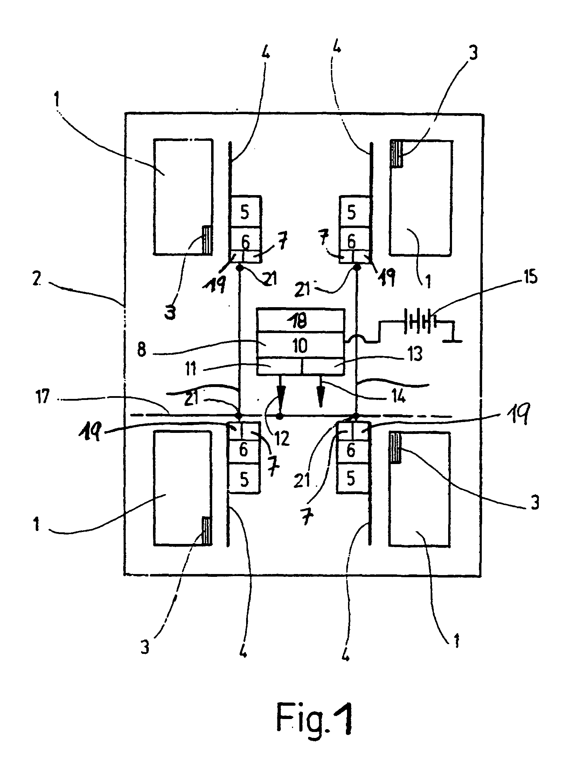

Figur 1 zeigt schematisch vier Räder 1 eines Fahrzeugs 2, insbesondere eines Automobils. An jedem Rad 1 ist eine Radelektronik 3 angebracht. Die Radelektroniken 3 sind untereinander gleich und haben in Bezug auf das jeweilige Rad 1 übereinstimmende Einbaulagen. Jede Radelektronik 3 enthält (nicht dargestellt) eine elektrische Batterie, einen vorzugsweise piezo-elektrisch arbeitenden Drucksensor mit zugehöriger Meß- und Steuerelektronik sowie einen Sender mit einer HF-Stufe, welche eine Sendeantenne speist. Der Sender sendet vom Drucksensor gewonnene und von der Meß- und Steuerelektronik verarbeitete Drucksignale in Gestalt von digitalen HF-Signalen aus, welche darüberhinaus ein die Herkunft von einer bestimmten Radelektronik 3 charakterisierendes Identifikationssignal enthalten.

Jedem Rad 1 benachbart ist in dem ihn umgebenden Radkasten der Karosserie des Fahrzeugs 2 eine Empfangsantenne 4 vorgesehen. Jeder Empfangsantenne 4 ist ein einkanaliger HF-Empfänger 5 in Verbindung mit einem Demodulator 6, mit einer Schaltungsanordnung 7 zur Erzeugung eines Kennungssignals und mit einer BUS-Schnittstelle 19 zugeordnet, und zwar bilden diese jeweils eine Baueinheit 20, welche durch einen BUS 17 mit einem zentralen Auswerte- und Steuergerät 8 verbunden ist, welches sich z. B. hinter einem Armaturenbrett des Fahrzeugs 1 befinden kann.

Das Auswerte- und Steuergerät 8 enthält am Eingang eine BUS-Schnittstelle 18, einen Mikroprozessor 10 für eine Signalauswertung und für Steuerungsaufgaben, einen BUS-Treiber 11 in einer BUS-Schnittstelle 12, über welche Warnsignale und andere Informationen über den Reifendruck über den BUS 17 am Armaturenbrett zur Anzeige gebracht sowie Signale für die Bedienung und Einstellung des Auswerte- und Steuergerätes 8 übermittelt werden können. Ferner hat das Auswerte- und Steuergerät 8 einen Treiber 13 für eine Diagnoseschnittsteile 14. Die Spannungsversorgung des Auswerte- und Steuergerätes 8 erfolgt aus dem Bordnetz, symbolisch dargestellt durch Verbindung des Auswerte- und Steuergerätes 8 mit einer Batterie 15 des Fahrzeugs. Die Spannungsversorgung der Baueinheiten 20 erfolgt über das Auswerte- und Steuergerät 8 und über Leitungen des BUS 17.

Das in Figur 1 dargestellte Reifendrucküberwachungssystem arbeitet folgendermaßen:

Die Radelektroniken 3 senden HF-Signale aus, welche ein Datentelegramm mit einer Präambel, mit einem die sendende Radelektronik 3 kennzeichnenden Identifikationssignal, ein Meßsignal und eine Postambel enthalten. Diese HF-Signale werden von den Antennen 4 empfangen, demoduliert, dekodiert, um ein in der Schaltungsanordnung 7 erzeugtes Kennungssignal ergänzt, welches den Einbauort der jeweiligen Empfangsantenne 4 charakterisiert, und der BUS-Schnittstelle 19 zugeleitet, welche einen BUS-Treiber enthält, welcher das Datenprotokoll des im Fahrzeug installierten BUS-Systems erzeugt und das von der Radelektronik 3 stammende Datentelegramm über den BUS 17 an das zentrale Auswerte- und Steuergerät 8 weiterleitet, wo es von der BUS-Schnittstelle 18 empfangen und im Mikroprozessor 10 ausgewertet wird. Der Mikroprozessor 10 vergleicht das im Datentelegramm enthaltene Kennungssignal, welches für den Einbauort der betreffenden Empfangsantenne 4 charakteristisch ist, mit den im Mikroprozessor 10 gespeicherten Kennungen aller möglicher Einbauorte von Empfangsantennen 4 und erkennt daraus im Falle einer Übereinstimmung, von welcher der Empfangsantennen 4 das ihm übermittelte Datentelegramm stammt.

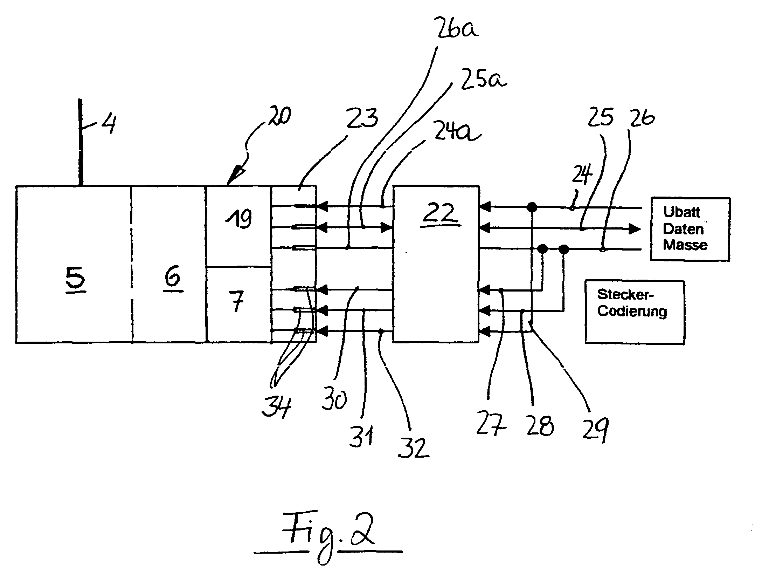

Das Kennungssignal, welches von der Schaltungsanordnung 7 erzeugt wird, wird dadurch bestimmt, welcher der Steckverbinder 21, mit welchen die Baueinheiten 20 mit dem BUS 17 verbunden sind, dem Einbauort einer ausgewählten Empfangsantenne 4 zugeordnet ist. Dies soll anhand der Figur 2 erläutert werden, welche in Blockdarstellung eine der Baueinheiten 20 darstellt, welche eine Empfangsantenne 4, einen HF-Empfänger 5 mit Demodulator 6, eine Schaltungsanordnung 7 zur Erzeugung des Kennungssignals und eine BUS-Schnittstelle 19 mit einem BUS-Treiber enthält. Zum Anschluß der Baueinheit 20 an den BUS 17 ist ein Steckverbinder 21 vorgesehen, bestehend aus einem ersten Verbindungsteil 22 in Gestalt eines Steckers und aus einem zweiten Verbindungsteil 23 in Gestalt eines an der Baueinheit 20 angebrachten Kupplers. Über diesen Steckverbinder 21 werden über eine erste Leitung 24 und einen zugehörigen Kontaktstift 24a vom Bordnetz die erforderliche Versorgungsspannung U bat über mehrere Datenleitungen, von denen nur eine Datenleitung 25 dargestellt ist, und über eine entsprechende Anzahl Kontaktstifte 25a Daten übertragen, über eine weitere Leitung 26 und einen zugehörigen Kontaktstift 26a die nötige Masseverbindung hergestellt. Über drei weitere Leitungen 27, 28 und 29 werden drei zusätzliche Kontaktstifte 30, 31, 32 des Steckers 22 zur Kodierung des Einbauortes herangezogen, indem diese Kontaktstifte 30, 31 und 32 in einer für den Einbauort charakteristischen Weise mit Masse und mit der Batteriespannung U batt verbunden werden. Im dargestellten Beispiel sind z.B. die Kontaktstifte 30 und 31 mit Masse verbunden und der Kontaktstift 32 führt gegenüber der Masse die Batteriespannung U batt. Die zusätzlichen Kontaktstifte 30, 31 und 32 stecken in entsprechend angeordneten Kontaktbuchsen 34 des Kuppiers 23, welche mit der Schaltungsanordnung 7 verbunden sind und diese entsprechend der Belegung der Kontaktstifte 30, 31 und 32 so steuern, daß sie ein von der Belegung der Kontaktstifte 30, 31 und 32 bestimmtes Kennungssignal erzeugt und dem Treiber in der BUS-Schnittstelle 19 übergibt, damit dieser es dem Datentelegramm hinzufügt, welches dann über die Datenleitungen 25 an das zentrale Auswerte- und Steuergerät 8 übermittelt wird.

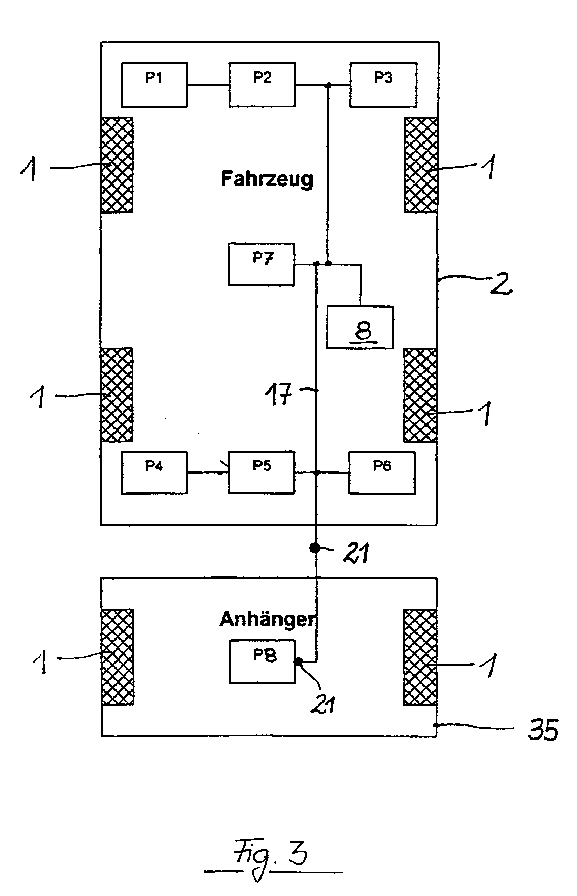

Figur 3 zeigt schematisch ein Fahrzeug 2 mit einem einachsigen Anhänger 35. Im Fahrzeug sind sieben Einbauorte P1 bis P7 für Empfangsantennen vorgesehen, am Anhänger 35 ein weiterer Einbauort P8. Nicht alle Einbauorte P1 bis P7 sind mit einer Empfangsantenne 4 in Verbindung mit einer Baueinheit 20 belegt. Bei einer Ausstattungsvariante wie in Figur 1 dargestellt sind im Fahrzeug 2 die Einbauorte P1, P3, P4 und P6 belegt. Bei einer preiswerteren Version wären z.B. nur die Einbauorte P2 (eine gemeinsame Baueinheit 20 für die beiden Vorderräder) und der Einbauort P5 (eine gemeinsame Baueinheit 20 für die Hinterräder) belegt. Bei einer noch preiswerteren Ausführungsform wäre nur der Einbauort P7 z.B. an einer zentralen Stelle unterhalb des Bodenblechs der Karrosserie mit einer Baueinheit 20 belegt. Für den Anhänger 35 ist in diesem Fall nur eine einzige Ausstattungsvariante vorgesehen, nämlich eine einzige Baueinheit 20 für die beiden einzigen auf einer gemeinsamen Achse sitzenden Räder 1. Auch im Anhänger 35 könnte aber jedem der beiden Räder 1 eine eigene Baueinheit 20 zugeordnet sein.

Aus der Kenntnis der Einbauorte P1 bis P8, von welchen ein Datentelegramm im Auswerte- und Steuergerät 8 ankommt, weiß dieses jedoch noch nicht, von welchem der Räder 1 das Datentelegramm stammt, denn grundsätzlich kann jede Empfangsantenne 4 Signale von jedem der Räder 1 empfangen. Die einem bestimmten Rad 1 am nächsten liegende Empfangsantenne 4 wird jedoch im Mittel die von der Radelektronik 3 an diesem Rad ausgesandten Signale mit größerer Intenstiät (Empfangsamplitude) empfangen als von den weiter entfernten Radelektroniken an den anderen Rädern. Durch einen Intensitätsvergleich der von einer bestimmten Empfangsantenne 4 aufgefangenen Signale kann deshalb ermittelt werden, welche Radelektronik an einer bestimmten Empfangsantenne 4 die höchste Signalintensität erzeugt, so daß aus der Signalintensität darauf geschlossen werden kann, von welcher Radelektronik und damit von welchem Rad eines Fahrzeuges ein bestimmtes Signal kommt. Wie ein solcher Intensitätsvergleich durchgeführt und zur Ermittlung der Radposition herangezogen werden kann, ist in der DE 196 08 478 A1 offenbart. Die jeweilige Radelektronik sendet zu diesem Zweck mit ihrem Datentelegramm auch ein Identifikationssignal aus, welches für die jeweilige Radelektronik 3 charakteristisch ist. Damit das Auswerte- und Steuergerät 8 eine Auswertung der Intensitäten der empfangenen Signale vornehmen kann, muß mit dem Datentelegramm, welches ihm über den BUS 17 übermittelt wird, auch noch eine Information über die Intensität des von der jeweiligen Empfangsantenne 4 empfangenen Signals, z.B. eine Information über die empfangene Signalfeldstärke, mitübertragen werden. Diese Information wird in der Fachsprache mit der Abkürzung RSSI bezeichnet (Received Signal Strength Indicator = Maß für die Empfangsfeldstärke). Um dieses zu ermöglichen, gibt es verschiedene Möglichkeiten:

Im einkanaligen HF-Empfänger 5 kann ein analoges Signal erzeugt werden, dessen Stärke proportional zum RSSI-Pegel des über Funk empfangenen Signals ist. Das analoge Signal kann z.B. dadurch erzeugt werden, daß das empfangene Signal verzweigt und ein Zweig mittels eines Kondensators integriert wird. Die sich am Kondensator aufbauende Spannung ist dann ein Maß für den empfangenen RSSI-Pegel.

Das analoge Signal kann als Gleichspannung oder als eingeprägter Gleichstrom über eine Leitung des BUS 17 zum zentralen Auswerte- und Steuergerät 8 übertragen werden.

Andererseits ist es möglich, den einkanaligen HF-Empfänger 5 so auszubilden, daß er den RSSI-Pegel der über Funk empfangenen Signale vor Ort auswertet, den RSSI-Pegel in ein digitales Signal wandelt und dieses digitale RSSI-Signal zusammen mit dem über Funk empfangenen und dann demodulierten, digitalen Empfangssignal zum zentralen Auswerte- und Steuergerät 8 überträgt. Die Übertragung des digitalen RSSI-Signals kann vor oder nach dem demodulierten digitalen Empfangssignal erfolgen.

Wenn nicht für jedes einzelne Rad 1 eine eigene Baueinheit 20 vorgesehen ist, sondern nur für je zwei Räder 1 auf einer gemeinsamen Achse eine eigene Baueinheit 20 oder für ein vierrädriges Fahrzeug nur eine einzige Baueinheit 20 vorgesehen ist, dann kann eine Zuordnung der Signale zu den verschiedenen Radpositionen dadurch erfolgen, daß in der Radelektronik 3 zusätzlich noch ein oder zwei Beschleunigungssensoren vorgesehen sind, welche Informationen über den Bewegungszustand des jeweiligen Rades 1 zu ermitteln erlauben, wie die Drehzahl, die Tangentialbeschleunigung und Unterschiede über die Rollwege, woraus sich eindeutig zwischen rechten Rädern und linken Rädern sowie vorderen Rädern und hinteren Rädern unterscheiden läßt. Wie das möglich ist, ist in den deutschen Patentanmeldungen 197 35 686.9 , 198 56 861.4 und 100 12 458.5 offenbart.

## Patentansprüche

1. Einrichtung an Fahrzeugen, die Räder (1) mit Luftreifen haben, mit einem im Fahrzeug (2) angeordneten Auswerte- und Steuergerät (8) und mit einer oder mehreren Empfangsantennen (4), welche einzelnen Rädem (1) oder Gruppen von Rädern (1) des Fahrzeuges (2) zugeordnet und über einen HF-Empfänger (5), zu welchem ein Demodulator (6) gehört, mit dem Auswerte- und Steuergerät (8) verbunden sind,
zur Verwendung in einem Reifendrucküberwachungssystem, in welchem ein an dem jeweiligen Rad (1) angebrachtes Gerät (3), das einen Drucksensor, welcher den Druck im Luftreifen mißt und ein elektrisches Druckmeßsignal erzeugt, eine Steuerschaltung und einen Sender mit einer Sendeantenne enthält, welcher von der Steuerschaltung gesteuert das Druckmeßsignal oder ein davon abgeleitetes Signal in Form eines Hochfrequenzsignals aussendet,
**dadurch gekennzeichnet, daß** jeder Empfangsantenne (4) ein eigener HF-Empfänger (5) in Verbindung mit einem Demodulator (6), einer Schaltungsanordnung (7) zum Erzeugen eines den Einbauort der jeweiligen Empfangsantenne (4) kennzeichnenden digitalen, elektrischen Kennungssignals und eine BUS-Schnittstelle (19) zugeordnet ist,
daß das Auswerte- und Steuergerät (8) eine BUS-Schnittstelle (18) hat,
daß die beiden BUS-Schnittstellen (18, 19) durch einen BUS (17) miteinander verbunden sind, wozu ein Steckverbinder (21) vorgesehen ist, welcher mit einem ersten Verbindungsteil (22) an den BUS (17) und mit einem zweiten Verbindungsteil (23) an die BUS-Schnittstelle (19) des HF-Empfängers (5) angeschlossen ist, und daß das erste Verbindungsteil (22) des Steckverbinders derart ausgebildet ist, daß es eine Kennung in elektrisch - mechanischer Form bereitstellt und durch seine Verbindung mit dem zweiten Verbindungsteil (23) des Steckverbinders der beim HF-Empfänger (5) vorgesehenen Schaltungsanordnung (7) zur Erzeugung des digitalen, elektrischen Kennungssignals übermittelt, welches durch die Kennung des ersten Verbindungsteils (22) bestimmt ist.

2. Einrichtung nach Anspruch 1, **dadurch gekennzeichnet, daß** jede Empfangsantenne (4) und der ihr zugeordnete HF-Empfänger (5) mit Demodulator (6), die Schaltungsanordnung (7) zur Erzeugung des Kennungssignals und die BUS-Schnittstelle (19) zu einer Baueinheit (20) zusammengefaßt sind.

3. Einrichtung nach Anspruch 1 oder 2, **dadurch gekennzeichnet, daß** die HF-Empfänger (5) mit Demodulator (6) und die Schaltungsanordnung (7) zum Erzeugen des Kennungssignals über die BUS-Schnittstelle (19) an das Bordnetz des Fahrzeuges (2) angeschlossen ist.

4. Einrichtung nach einem der vorstehenden Ansprüche, **dadurch gekennzeichnet, daß** jedem Rad (1) des Fahrzeugs (2) eine eigene Empfangsantenne (4) in seiner Nachbarschaft zugeordnet ist.

5. Einrichtung nach einem der Ansprüche 1 bis 3, **dadurch gekennzeichnet, daß** den auf einer gemeinsamen Achse des Fahrzeuges (2) angeordneten Rädern (1) eine Empfangsantenne (4) gemeinsam zugeordnet ist.

6. Einrichtung nach einem der vorstehenden Ansprüche, **dadurch gekennzeichnet, daß** für Anhänger (35) mit Rädern (1), welche für die Reifendrucküberwachung ihrer Räder (1) ebenfalls eine oder mehrere Empfangsantennen (4) haben, denen jeweils ein HF-Empfänger (5) in Verbindung mit einem Modulator (6), einer Schaltungsanordnung (7) zur Erzeugung eines eigenen Kennungssignals und eine BUS-Schnittstelle (19) zugeordnet ist, zwischen dem Fahrzeug (1) und seinem Anhänger (35) ein weiterer Steckverbinder (21) im BUS-System vorgesehen ist, um die BUS-Schnittstelle (19) des Anhängers (35) mit dem BUS (17) im Fahrzeug (2) zu verbinden.

7. Einrichtung nach einem der vorstehenden Ansprüche, **dadurch gekennzeichnet, daß** die Baueinheiten (20) aus Empfangsantenne (4), HF-Empfänger (5), Modulator (6), Schaltungsanordnung (7) zur Erzeugung von Kennungssignalen und BUS-Schnittstelle (19) untereinander identisch ausgebildet sind.

8. Einrichtung nach einem der vorstehenden Ansprüche, **dadurch gekennzeichnet, daß** beide Teile (22, 23) des Steckverbinders (21) für die elektrisch - mechanische Kodierung mehrere zusätzliche aus jeweils einem Kontaktstift (30, 31, 32) und einer dazu passenden Kontaktbuchse (34) gebildete Kontaktpaare aufweisen, wobei im ersten Verbindungsteil (22) des Steckverbinders (21) wenigstens einer der zusätzlichen Kontaktstifte (30, 31) bzw. Kontaktbuchsen mit Masse und ein anderer der Kontaktstifte (32) bzw. Kontaktbuchsen mit einer gegenüber der Masse Spannung führenden Leitung (26) des Bordnetzes verbunden ist, und die Auswahl und Polung dieser Kontaktstifte (30, 31, 32) bzw. Kontaktbuchsen für jeden vorgesehenen möglichen Einbauort von Empfangsantennen (4) eine andere ist, jedoch für Fahrzeuge einer Modellfamilie gleich bleibt.

9. Einrichtung nach einem der vorstehenden Ansprüche, **dadurch gekennzeichnet, daß** der Steckverbinder (21) aus einem am BUS (17) angebrachten Stecker (22) und aus einem an der BUS-Schnittstelle (19), welche einer Empfangsantenne (4) zugeordnet ist, angebrachten Kuppler (23) besteht.

10. Einrichtung nach Anspruch 9, **dadurch gekennzeichnet, daß** der Kuppler(23) fest an einem Gehäuse angebracht ist, welches den HF-Empfänger (5) mit Modulator (6), die Schaltungsanordnung (7) zur Erzeugung von Kennungssignalen und die BUS-Schnittstelle (19) enthält.

11. Einrichtung nach einem der vorstehenden Ansprüche, **dadurch gekennzeichnet, daß** der BUS (17) Bestandteil eines Kabelbaumes ist, an welchem die ersten Verbindungsteile (23) für die verschiedenen Einbauorte der Empfangsantennen montiert sind.

## Claims

1. Arrangement on vehicles equipped with wheels (1) with pneumatic tires, having an evaluation and control unit (8) arranged in the vehicle (2) and one or more receiving antennas (4), that are assigned to individual wheels (1) or groups of wheels (1) of the vehicle (2) and are connected to the evaluation and control unit (8) via an RF receiver (5) comprising a demodulator (6),
for use in a tire-pressure monitoring system in which a unit (3), that is mounted on the respective wheel (1) and that comprises
- a pressure sensor for measuring the pressure in the pneumatic tire and for generating an electric pressure-measurement signal,
- a control circuit and
- a transmitter with a sending antenna for sending out, under the control of the control circuit, the pressure-measuring signal or a signal derived therefrom in the form of a radio-frequency signal,
**characterized in that** each receiving antenna (4) has assigned to it a separate RF receiver (5) in combination with a demodulator (6), a circuit arrangement (7) for the generation of a digital electric identification signal characteristic of the mounting location of the respective receiving antenna (4), and a BUS interface (19),
that the evaluation and control unit (8) comprises a BUS interface (18),
that the two BUS interfaces (18, 19) are connected one to the other by a BUS (17), for which purpose a plug-in connector (21) is provided which is connected to the BUS (17) by a first connector element (22) and to the BUS interface (19) of the RF receiver (5) by a second connector element (23), and that the first connector element (22) of the plug-in connector is designed so as to provide an identifier in electric/mechanical form and to supply it to the circuit arrangement (7) provided on the side of the RF receiver (5), through its connection to the second connector element (23), for the generation of the digital electric identification signal characteristic of the identifier of the first connector element (22).

2. The arrangement as defined in Claim 1, **characterized in that** each receiving antenna (4) and its associated RF receiver (5) with demodulator (6), the circuit arrangement (7) for the generation of the identification signal and the BUS interface (19) are combined to one module (20).

3. The arrangement as defined in Claim 1 or Claim 2, **characterized in that** the RF receivers (5) with demodulator (6) and the circuit arrangement (7) for the generation of the identification signal are connected to the wiring of the motor vehicle (2) via the BUS interface (19).

4. The arrangement as defined in any of the preceding claims, **characterized in that** each wheel (1) of the vehicle (2) has associated to it a separate receiving antenna (4) arranged in its neighborhood.

5. The arrangement as defined in any of Claims 1 to 3, **characterized in that** a common receiving antenna (4) is assigned to the wheels (1) mounted on a common axle of the vehicle (2).

6. The arrangement as defined in any of the preceding claims, **characterized in that** in the case of trailers (35) with wheels (1), having likewise one or more receiving antennas (4) for monitoring the tire pressure of their wheels (1 ), with an RF receiver (5) in combination with a modulator (6), a circuit arrangement (7) for the generation of a characteristic identification signal and a BUS interface (19) associated to each antenna, an additional plug-in connector (21) is provided in the BUS system between the vehicle (1) and its trailer (35) for connecting the BUS interface (19) of the trailer (35) to the BUS (17) in the vehicle (2).

7. The arrangement as defined in any of the preceding claims, **characterized in that** the modules (20),
consisting of the receiving antenna (4), the RF receiver (5), the modulator (6), the circuit arrangement (7) for the generation of identification signals, and the BUS interface (19), are identical one to the other.

8. The arrangement as defined in any of the preceding claims, **characterized in that** the two elements (22, 23) of the plug-in connector (21) each comprise, for electric/mechanical coding purposes, a plurality of additional contact pairs, each consisting of a contact pin (30, 31, 32) and a matching contact jack (34), with at least one of the additional contact pins (30, 31) or contact jacks of the first connector element (22) of the plug-in connector (21) being connected to ground and another one of the contact pins (32) or contact jacks being connected to a line (26) of the vehicle wiring carrying a voltage over ground, and that the selection and pole-connection of those contact pins (30, 31, 32) or contact jacks is different for each possible mounting location of receiving antennas (4) envisaged, but remains equal for all vehicles of one model family.

9. The arrangement as defined in any of the preceding claims, **characterized in that** the plug-in connector (21) consists of a plug (22) arranged on the BUS (17) and of a coupler (23) arranged on the BUS interface (19) associated to the receiving antenna (4).

10. The arrangement as defined in Claim 9, **characterized in that** the coupler (23) is fixed on a housing that contains the RF receiver (5) with the modulator (6), the circuit arrangement (7) for the generation of identification signals and the BUS interface (19).

11. The arrangement as defined in any of the preceding claims, **characterized in that** the BUS (17) is part of a cable harness on which the first connector elements (23) for the different mounting locations of the receiving antennas are mounted.

## Revendications

1. Dispositif monté sur des véhicules automobiles qui possèdent des roues (1) équipées de bandages pneumatiques, comprenant un appareil d'évaluation et de commande (8) monté dans le véhicule automobile (2), ainsi qu'une ou plusieurs antennes de réception (4) qui sont attribuées à des roues individuelles (1) ou à des groupes de roues (1) du véhicule automobile (2) et qui sont reliées, via un récepteur hautes fréquences (5), dont fait partie un démodulateur (6), à l'appareil d'évaluation et de commande (8), à utiliser dans un système de surveillance de la pression des bandages pneumatiques, dans lequel un capteur de la pression, qui mesure la pression régnant dans les bandages pneumatiques et qui génère un signal de mesure électrique de la pression, un circuit de commande et un inhibiteur comprenant une antenne d'émission qui, sous la commande du circuit de commande, émet le signal de mesure de la pression ou un signal qui dérive de ce dernier, sous la forme d'un signal haute fréquence, **caractérisé en ce que**, à chaque antenne de réception (4), est attribué un récepteur haute fréquence (5) en liaison avec un démodulateur (6) d'un agencement de circuits (7) pour générer un signal d'identification électrique numérique identifiant l'endroit de montage de l'antenne de réception respective (4) et un circuit d'interface bus (19), **en ce que** l'appareil d'évaluation et de commande (8) possède un circuit d'interface bus (18), **en ce que** les deux circuits d'interfaces bus (18, 19) sont reliés l'un à l'autre par un bus (17), un connecteur (21) étant prévu à cet effet, ledit connecteur étant raccordé, avec une première partie de liaison (22), au bus (17) et, avec une deuxième partie de liaison (23), au circuit d'interface bus (19) du récepteur haute fréquence (5), et **en ce que** la première partie de liaison (22) du connecteur est réalisée de telle sorte qu'elle procure une identification sous une forme électrique - mécanique qu'elle transmet, via sa liaison avec la deuxième partie de liaison (23) du connecteur de l'agencement de circuits (7) prévu dans le récepteur haute fréquence (5) pour l'obtention du signal d'identification électrique numérique qui est déterminé par l'identification de la première partie de liaison (22).

2. Dispositif selon la revendication 1, **caractérisé en ce que** chaque antenne de réception (4) et le récepteur haute fréquence (5) qui lui est attribué, comprenant le démodulateur (6), l'agencement de circuits (7) pour l'obtention du signal d'identification et le circuit d'interface bus (19), sont rassemblés pour former une unité de montage (20).

3. Dispositif de la revendication 1 ou 2, **caractérisé en ce que** le récepteur haute fréquence (5) comprenant le démodulateur (6) et l'agencement de circuits (7) pour l'obtention du signal d'identification est raccordé, via le circuit d'interface bus (19), au réseau de distribution de bord du véhicule automobile (2).

4. Dispositif selon l'une quelconque des revendications précédentes, **caractérisé en ce que**, à chaque roue (1) du véhicule automobile (2), est attribuée une antenne de réception propre (4), à proximité de la première citée.

5. Dispositif selon l'une quelconque des revendications 1 à 3, **caractérisé en ce que**, aux roues (1) montées sur un essieu commun du véhicule automobile (2), est attribuée, de manière conjointe, une antenne de réception (4).

6. Dispositif selon l'une quelconque des revendications précédentes, **caractérisé en ce que**, pour des remorques (35) équipées de roues (1), qui possède, pour la surveillance de la pression des bandages pneumatiques de leurs roues (1), également une ou plusieurs antennes de réception (4) auxquelles est attribué respectivement un récepteur haute fréquence (5) en liaison avec un modulateur (6), avec un agencement de circuits (7) pour l'obtention d'un signal d'identification propre et avec un circuit d'interface bus (19), on prévoit, entre le véhicule automobile (1) et sa remorque (35), un connecteur supplémentaire (21) dans le système bus, pour relier le circuit d'interface bus (19) de la remorque (35) au bus (17) dans le véhicule automobile (2).

7. Dispositif selon l'une quelconque des revendications précédentes, **caractérisé en ce que** les unités de montage (20) constituées par l'antenne de réception (4), par le récepteur haute fréquence (5), par le modulateur (6), par l'agencement de circuits (7) pour l'obtention de signaux d'identification et par le circuit d'interface bus (19) sont réalisées de façon à être identiques l'une à l'autre.

8. Dispositif selon l'une quelconque des revendications précédentes, **caractérisé en ce que** les deux parties (22, 23) du connecteur (21) pour le codage électrique - mécanique présentent plusieurs paires de contacts supplémentaires formées à partir de, respectivement, une broche de contact (30, 31, 32) et une broche femelle de contact correspondante (34), dans lequel, dans la première partie de liaison (22) du connecteur (21), au moins une des broches de contact supplémentaires (30, 31), respectivement au moins une des broches femelles de contact supplémentaire (32) est reliée à la masse et une autre broche de contact (32), respectivement une autre broche de contact femelle est reliée à un circuit (26) du réseau de distribution de bord, ledit circuit étant un circuit conducteur de tension par rapport à la masse, la sélection et la polarisation de ces broches de contact (30, 31, 30), respectivement, de ces broches de contact femelles étant différentes pour chaque endroit de montage possible prévu des antennes de réception (4), tandis qu'elles peuvent rester identiques pour des véhicules d'une même famille de modèle.

9. Dispositif selon l'une quelconque des revendications précédents, **caractérisé en ce que** le connecteur (21) est constitué par une fiche mâle (22) et par un coupleur (23) appliqué sur le circuit d'interface bus (19) auquel est attribuée une antenne de réception (4).

10. Dispositif selon revendication 9, **caractérisé en ce que** le coupleur (23) est fixé à demeure à un boîtier qui contient le récepteur haute fréquence (5) comprenant le modulateur (6), l'agencement de circuits (7) pour l'obtention de signaux d'identification et le circuit d'interface bus (19).

11. Dispositif selon l'une quelconque des revendications précédentes, **caractérisé en ce que** le bus (17) est un constituant d'un faisceau de câblage sur lequel sont montées les premières parties de liaison (23) pour les différents endroits de montage des antennes de réception.
